Europäisches Patentamt

European Patent Office

Office européen des brevets

(19)

(11) Veröffentlichungsnummer: **0 126 224**
A1

# (12) EUROPÄISCHE PATENTANMELDUNG

(21) Anmeldenummer: 84102155.3

(22) Anmeldetag: 01.03.84

(51) Int. Cl.³: **A 01 B 19/06**, E 02 F 3/76

(30) Priorität: 19.05.83 DE 3318327

(43) Veröffentlichungstag der Anmeldung: 28.11.84
Patentblatt 84/48

(84) Benannte Vertragsstaaten: BE DE FR GB

(71) Anmelder: **Krupp Polysius AG, Graf-Galen-Strasse 17,
D-4720 Beckum (DE)**

(72) Erfinder: **Lütke, Josef Hubertus Maria, Klarastrasse 34,
D-4720 Beckum (DE)**

(74) Vertreter: **Tetzner, Volkmar, Dr.-Ing. Dr. Jur.,
Van-Gogh-Strasse 3, D-8000 München 71 (DE)**

(54) Böschungsräumgerät.

(57) Die Erfindung betrifft ein Böschungsräumgerät, bei dem sich der Angriffspunkt (4) des Zugelementes (6) am Rechen (2) bei der hin- und hergehenden Bewegung des Rechens längs einer parallel zur Bewegungsbahn des Rechens verlaufenden Geraden bewegt. Dadurch bleibt die Neigung des Rechens bei seiner Verfahrbewegung erhalten.

## Böschungsräumgerät

Die Erfindung betrifft ein Böschungsräumgerät entsprechend dem Oberbegriff des Anspruches 1.

Bei Böschungsräumgeräten der im Oberbegriff des Anspruches 1 genannten Art ist der Rechen in seinem unteren Bereich um eine horizontale Achse schwenkbar gelagert und läßt sich damit in seiner Neigung der jeweiligen Haldenböschung anpassen. Um das in der Halde gelagerte Schüttgut aufzulockern und zum Abrieseln zu bringen, wird der Rechen parallel zu seiner horizontalen Schwenklagerachse hin- und herbewegt.

Üblicherweise wird nun der Rechen in seiner geneigten Lage durch ein Zugelement gehalten, das im oberen Bereich des Rechens angreift und zu einer festen Umlenkstelle am Böschungsräumgerät geführt ist. Bei der hin- und hergehenden Bewegung des Rechens führt infolgedessen der Angriffspunkt des Zugelementes am Rechen eine kreisbogenförmige Bewegung (um die feststehende Umlenkstelle des Zugelementes am Böschungsräumgerät) aus. Hierdurch ergibt sich bei der hin- und hergehenden Bewegung des Rechens zugleich eine ständige Änderung der Neigung des Rechens, was die Wirksamkeit des Rechens beeinträchtigt.

Der Erfindung liegt daher die Aufgabe zugrunde, unter Vermeidung dieses Nachteiles ein Böschungsräumgerät der im Oberbegriff des Anspruches 1 vorausgesetzten Art so auszubilden, daß der Rechen bei seiner parallel zur horizontalen Schwenkachse erfolgenden, hin- und hergehenden Bewegung seine Neigung beibehält.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche und werden im Zusammenhang mit der Beschreibung eines in der Zeichnung dargestellten Ausführungsbeispieles näher erläutert.

In der Zeichnung zeigen:

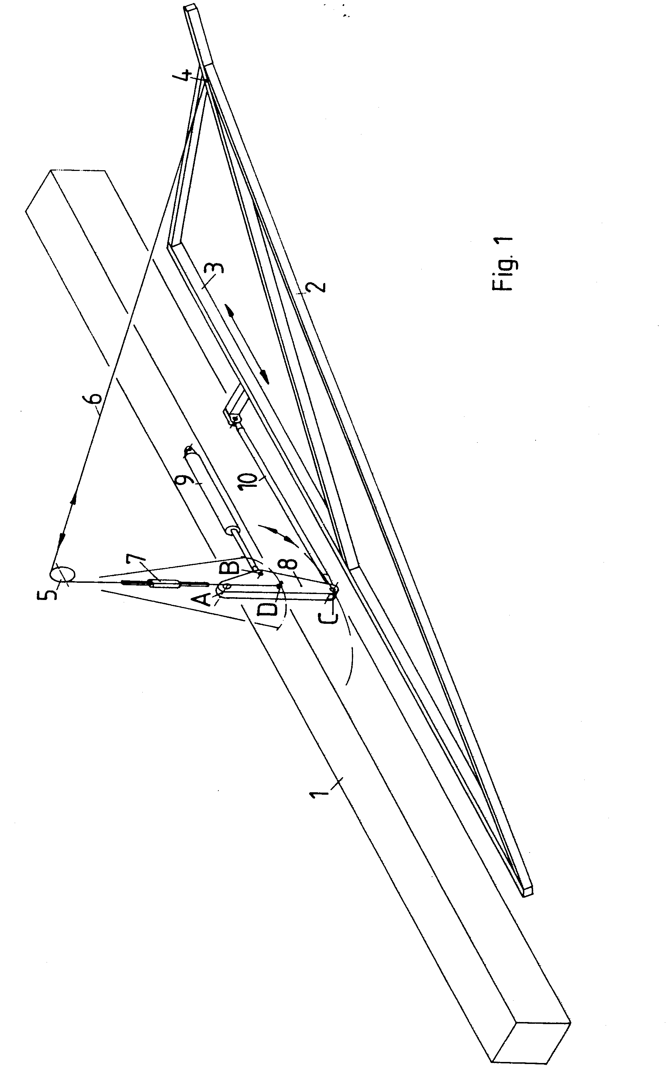

Fig. 1    Eine Schemadarstellung der für das Verständnis der Erfindung wesentlichen Teile des neuen Böschungsräumgerätes,

Fig. 2    eine Schemadarstellung zur Erläuterung der Änderung der einzelnen Teilstrecken des Zugelementes bei der hin- und hergehenden Bewegung des Rechens.

Am Träger 1 eines im übrigen nicht näher veranschaulichten Böschungsräumgerätes ist ein Rechen 2 gehaltert, der im Bereich seiner Basis 3 um eine horizontale Achse schwenkbar ist, so daß seine Neigung entsprechend der Böschung der zu räumenden Halde eingestellt werden kann.

Ein Zugelement 6 greift im oberen Bereich des Rechens 2 an einem Punkt 4 an und ist über eine feste Umlenkstelle 5 des Böschungsräumgerätes geführt. Das andere Ende des Zugelementes 6 ist im Punkt D an einem Winkelhebel 8 befestigt, der um einen Drehpunkt A schwenkbar ist. Am Winkelhebel 8 greift im Punkt B die Kolbenstange einer Antriebseinrichtung 9 an. Das dem Drehpunkt A abgewandte Ende des Winkelhebels 8 ist in Punkt C mit einer Gelenkstange 10 verbunden, die an der Basis 3 des Rechens 2 angreift.

Im Zugelement 6 ist ferner noch ein Zwischenglied 7 vorgesehen, mit dem sich die wirksame Länge des Zugelementes 6 und damit die Neigung des Rechens 2 einstellen läßt.

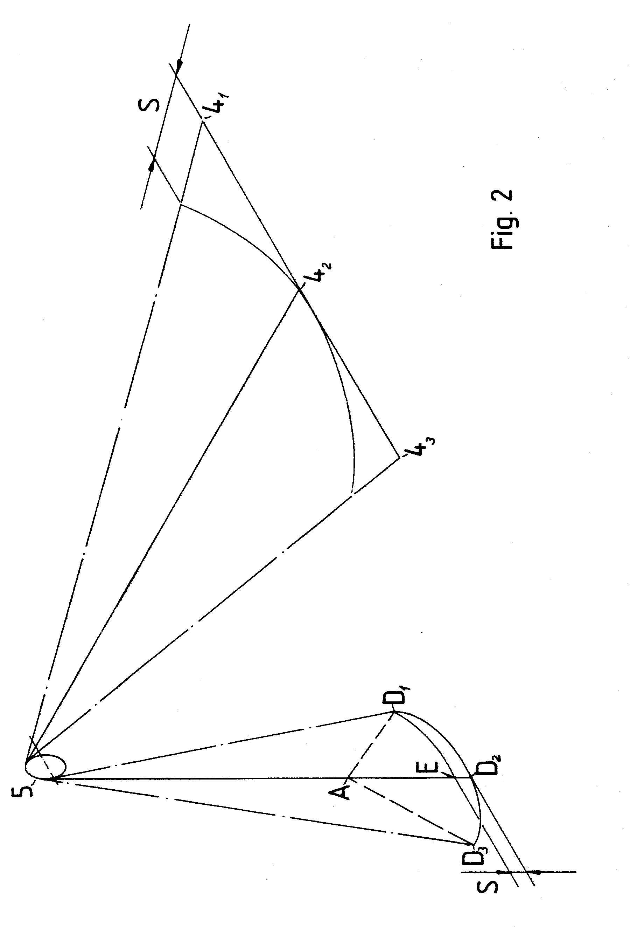

Wird der Winkelhebel 8 durch die Antriebseinrichtung 9 um den Drehpunkt A in Richtung des Doppelpfeiles 11 hin- und hergeschwenkt, so führt der Rechen 2 eine geradlinige, hin- und hergehende Bewegung parallel zu seiner Basis 3 (in Richtung des Doppelpfeiles 12) aus. Dabei wandert der Punkt D (an dem das Zugelement 6 am Winkelhebel 8 angreift) längs eines Kreisbogens um den Drehpunkt A, wobei sich der Punkt D von $D_1$ über $D_2$ zu $D_3$ (und wieder zurück) bewegt (vgl. Fig. 2). Bei der Bewegung des Punktes D von $D_2$ nach $D_1$ verkürzt sich die Länge des zwischen dem Punkt D und der Umlenkstelle 5 vorhandenen Teiles des Zugelementes 6 um die Strecke $ED_2$. Um die-

selbe Strecke verlängert sich andererseits der Teil des Zugelementes 6, der zwischen der Umlenkstelle 5 und dem Punkt 4 liegt. Durch geeignete Wahl des Punktes D (relativ zum Drehpunkt A) läßt es sich nun erreichen, daß die Strecke $ED_2$ gerade gleich der Strecke s ist, um die sich der Teil des Zugelementes 6 zwischen der Umlenkstelle 5 und dem Punkt 4 verlängern muß, wenn sich der Punkt 4 von der Stelle $4_2$ zu der Stelle $4_1$ bzw. $4_3$ bewegt. Auf diese Weise bewegt sich dann der Angriffspunkt 4 des Zugelementes 6 am Rechen 2 bei der hin- und hergehenden Bewegung des Rechens längs einer Geraden (nämlich der Geraden, die durch die Punkte $4_1$, $4_2$ und $4_3$ verläuft), die parallel zur Bewegungsbahn des Rechens (Doppelpfeil 12) verläuft. Damit bleibt die Neigung des Rechens 2 während der hin- und hergehenden Bewegung erhalten.

Patentansprüche:

1. Böschungsräumgerät, enthaltend

   a) einen Rechen (2), der in seinem unteren
      Bereich um eine horizontale Achse schwenkbar gelagert ist,

   b) ein den Rechen in geneigter Lage haltendes
      Zugelement (6), das von einem Angriffspunkt
      (4) am Rechen über eine feste Umlenkstelle
      (5) am Böschungsräumgerät geführt ist,

   c) eine Antriebseinrichtung (9), durch die der
      Rechen (2) über ein Antriebsgestänge (8, 10)
      parallel zu seiner horizontalen Schwenklager-
      achse relativ zum übrigen Böschungsräumge-
      rät hin und her bewegbar ist,

   dadurch gekennzeichnet,

   daß das Zugelement (6) von der Umlenkstelle (5)
   zu einem Punkt (D) des Antriebsgestänges (8,10)
   geführt ist, der so gewählt ist, daß sich der
   Angriffspunkt (4) des Zugelementes (6) am Rechen
   (2) bei der hin- und hergehenden Bewegung des
   Rechens längs einer parallel zur Bewegungsbahn
   des Rechens verlaufenden Geraden bewegt.

2. Böschungsräumgerät nach Anspruch 1, dadurch gekennzeichnet, daß das Antriebsgestänge (8,10) einen durch die Antriebseinrichtung (9) schwenkbaren Winkelhebel (8) enthält, dessen Drehpunkt (A) zwischen der Umlenkstelle (5) und dem Punkt (D) liegt, in dem das Zugelement (6) mit dem Winkelhebel (8) verbunden ist.

3. Böschungsräumgerät nach Anspruch 2, dadurch gekennzeichnet, daß das dem Drehpunkt (A) abgewandte Ende des Winkelhebels (8) über eine Gelenkstange (10) mit dem Rechen (2) verbunden ist.

4. Böschungsräumgerät nach Anspruch 1, dadurch gekennzeichnet, daß in dem Zugelement (6) ein Zwischenglied (7) zur Einstellung der wirksamen Länge des Zugelementes und damit der Neigung des Rechens (2) vorgesehen ist.

Fig. 1

01262224

Fig. 2

0126224

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-3 011 277 (ARNOLD)<br>* Figuren 1,2; Spalte 1, Zeile 54 - Spalte 2, Zeile 16 * | 1,4 | A 01 B 19/06<br>E 02 F 3/76 |
| A | BE-A- 517 922 (BRISCOE)<br>* Figuren 1,2; Seite 3, Zeile 11 - Seite 4, Zeile 4 * | 1,4 | |
| A | DE-A- 947 653 (HÜRLIMANN) | | |

RECHERCHIERTE SACHGEBIETE (Int. Cl. 3)

A 01 B
E 02 F

Der vorliegende Recherchenbericht wurde für alle Patentansprüche erstellt.

| Recherchenort | Abschlußdatum der Recherche | Prüfer |
|---|---|---|
| DEN HAAG | 31-08-1984 | DISSEN H.D. |